# EUROPEAN PATENT APPLICATION

(11) **EP 3 842 885 A1**
(43) Date of publication of application: **30.06.2021**
(21) Application number: 19852597.4
(22) Date of filing: 15.07.2019
(51) Int. Cl.: G05D 1/00, G01S 17/88

(54) **AUTONOMOUS MOVEMENT DEVICE, CONTROL METHOD AND STORAGE MEDIUM**

(30) Priority: 22.08.2018 CN 201810958347; 18.09.2018 CN 201811089507
(71) Applicant: Ecovacs Robotics Co., Ltd., Wuzhong District Suzhou, Jiangsu 215168 (CN)
(72) Inventor: CEN, Bin, Suzhou, Jiangsu 215168 (CN); LIU, Yang, Suzhou, Jiangsu 215168 (CN)
(74) Representative: Viering, Jentschura & Partner mbB Patent- und Rechtsanwälte
(86) International application number: PCT/CN2019/095962
(87) International publication number: WO 2020/038155

(57) **Abstract**

Embodiments of the present disclosure provide an autonomous mobile device, a control method and a storage medium. In the embodiments of the present disclosure, the autonomous mobile device performs environment sensing based on environment information acquired by an area array laser sensor to complete various functions, where the environment information acquired by the area array laser sensor comprises high-precision and high-resolution direction and distance information and reflectivity information to obtain environment characteristics with matching and identification values, with strong environment identification capability, and the spatial understanding of the autonomous mobile device on the environment can be improved. Compared with a sensing solution based on an image sensor, the area array laser sensor may provide more accurate distance and direction information and reduce the complexity of sensing operations, thereby improving real-time performance.

## Description

### FIELD

The present disclosure relates to the technical field of artificial intelligence, and in particular to an autonomous mobile device, a control method, and a storage medium.

### BACKGROUND

With the development of artificial intelligence technology, research on autonomous mobile devices such as robots has gradually deepened. An autonomous mobile device may sense and interact with an external environment, which may be the basis for the autonomous mobile device to move and perform tasks autonomously. At present, an autonomous mobile device may generally sense the external environment through sensors such as a single-line laser radar, a multi-line laser radar, an image sensor and the like so as to meet the autonomous requirements such as obstacle identification and positioning.

However, there are some defects in current solutions of sensing the external environment based on a single-line laser radar, a multi-line laser radar, an image sensor and other sensors. For example, a sensing solution based on an image sensor may have high operation complexity and low real-time performance. A sensing solution based on a single-line or multi-line laser radar may have a certain limit in spatial understanding capability. Therefore, there is a need to provide a new sensing solution for autonomous mobile devices.

### SUMMARY

The present disclosure provides an autonomous mobile device, a control method, and a storage medium to improve the spatial understanding capability of the autonomous mobile device on the environment, reduce operation complexity, and improve real-time performance.

Embodiments of the present disclosure may provide an autonomous mobile device, which may include: a device body, where the device body may be provided with a control unit and an area array laser sensor, and the control unit may be electrically connected with the area array laser sensor; the area array laser sensor may be for acquiring environment information in the operating environment of the autonomous mobile device and transmitting the environment information to the control unit; and the control unit may be for performing function control on the autonomous mobile device according to the environment information.

Embodiments of the present disclosure may further provide a control method for the autonomous mobile device, which may include: controlling an area array laser sensor on the autonomous mobile device to acquire environment information in the operating environment of the autonomous mobile device; obtaining the environment information output by the area array laser sensor; and performing function control on the autonomous mobile device according to the environment information.

Embodiments of the present disclosure may further provide a computer-readable storage medium having stored thereon a computer program that, when executed by one or more processors, causes the one or more processors to perform the following acts: controlling an area array laser sensor on the autonomous mobile device to acquire environment information in the operating environment of the autonomous mobile device; obtaining the environment information output by the area array laser sensor; and performing function control on the autonomous mobile device according to the environment information.

In some embodiments of the present disclosure, the autonomous mobile device may perform environment sensing based on the environment information acquired by an area array laser sensor provided thereon so as to complete various functions, where the environment information acquired by the area array laser sensor may comprise high-precision and high-resolution direction and distance information and reflectivity information, from which environment characteristics with matching and identification values can be obtained, with strong environment identification capability, and the spatial understanding of the autonomous mobile device on the environment may be improved. Compared with a sensing solution based on an image sensor, the area array laser sensor may provide more accurate distance and direction information and reduce the complexity of sensing operations, thereby improving real-time performance.

### BRIEF DESCRIPTION OF THE DRAWINGS

The accompanying drawings, which are included to provide a further understanding of the present disclosure and are incorporated in and constitute a part of this present disclosure, illustrate the embodiments of the present disclosure and together with the description serve to explain the present disclosure and are not to be construed as unduly limiting the present disclosure. In the drawings:
FIG. 1a is a schematic illustration of a hardware structure of an autonomous mobile device according to an exemplary embodiment of the present disclosure;
FIG. 1b is a schematic illustration of a hardware structure of another autonomous mobile device according to an exemplary embodiment of the present disclosure;
FIGs. 2a-2d are schematic views of the outer contour of a plurality of floor sweeping robots according to exemplary embodiments of the present disclosure;
FIG. 3 is a schematic illustration showing a height of an unmanned vehicle according to an exemplary embodiment of the present disclosure;
FIG. 4a is a schematic view showing a state where an area array laser sensor is provided on an autonomous mobile device having a circular outer contour according to an exemplary embodiment of the present disclosure;
FIGs. 4b-4d are front, top and side views, respectively, of an area array laser sensor provided in a cylindrical autonomous mobile device according to an exemplary embodiment of the present disclosure;
FIGs. 4e-4g are schematic views of an area array laser sensor provided at a middle position, a top position or a bottom position of a square-shaped autonomous mobile device according to an exemplary embodiment of the present disclosure;
FIGs. 5a and 5b are front and top views, respectively, of a state where the farthest line-of-sight ends of the horizontal viewing angles of adjacent area array laser sensors on an autonomous mobile device having a circular outer contour intersect;
FIGs. 5c and 5d are front and top views, respectively, of a state where the horizontal viewing angles of adjacent area array laser sensors on an autonomous mobile device having a circular outer contour partially overlap;
FIGs. 5e and 5f are front and top views, respectively, of a state where boundaries of the horizontal viewing angles of adjacent area array laser sensors on an autonomous mobile device having a circular outer contour are parallel;
FIGs. 6a and 6b are front and top views, respectively, of a state where the farthest line-of-sight ends of the horizontal viewing angles of adjacent area array laser sensors on the autonomous mobile device having a triangular outer contour intersect;
FIGs. 6c and 6d are front and top views, respectively, of a state where the horizontal viewing angles of adjacent area array laser sensors on an autonomous mobile device having a triangular outer contour partially overlap;
FIGs. 6e and 6f are front and top views, respectively, of a state where boundaries of the horizontal viewing angles of adjacent area array laser sensors on the autonomous mobile device having a triangular outer contour are parallel;
FIG. 7 is a flow diagram of a control method for an autonomous mobile device according to an exemplary embodiment of the present disclosure; and
FIG. 8 is a pattern diagram of a 3D grid map constructed based on environment information acquired by an area array laser sensor according to an exemplary embodiment of the present disclosure.

### DETAILED DESCRIPTION OF EXAMPLE EMBODIMENTS

The purposes, technical solutions and advantages of the present disclosure will be more apparent from the following detailed and complete description of the present disclosure, taken in conjunction with specific embodiments of the present disclosure and the accompanying drawings. Obviously, the embodiments described herein are only some exemplary embodiments of the present disclosure, and are not all of the embodiments thereof. Based on the embodiments in the present disclosure, all other embodiments obtained by those of ordinary skill in the art without involving any inventive effort are within the scope of protection of the present disclosure.

Aiming at the defects of existing autonomous mobile devices in sensing the external environment, some embodiments of the present disclosure provide a solution where an area array laser sensor is applied to an autonomous mobile device, and the autonomous mobile device senses the environment based on the environment information acquired by the area array laser sensor so as to complete various functions. In some embodiments of the present disclosure, environment information acquired by the area array laser sensor may comprise high-precision and high-resolution direction and distance information and reflectivity information from which environment characteristics with matching and identification values may be obtained. Some embodiments may include strong environment identification capability and the spatial understanding of autonomous mobile devices on the environment may be improved and, compared with a sensing solution based on an image sensor, more accurate distance and direction information may be provided and the complexity of the sensing operation may be reduced, thereby improving real-time performance.

The technical solution provided by the embodiments of the present disclosure is described in detail below with reference to the accompanying drawings.

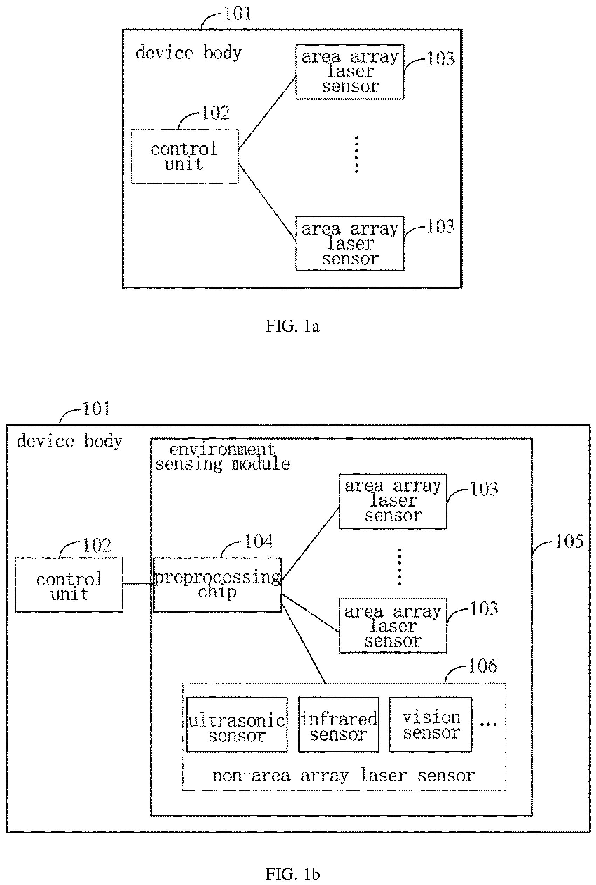

FIG. 1a is a schematic illustration of a hardware structure of an autonomous mobile device according to an exemplary embodiment of the present disclosure. As shown in FIG. 1a, the autonomous mobile device may include: a device body 101, where a control unit 102 and an area array laser sensor 103 may be provided on the device body 101, and the control unit 102 is electrically connected with the area array laser sensor 103.

The autonomous mobile device according to the present embodiment may be any mechanical device capable of highly autonomous spatial movement in an operating environment such as, for example, an unmanned vehicle, an unmanned aerial vehicle, a robot and the like. The autonomous mobile device may include various robots such as a sweeping robot, other service robots and the like. A sweeping robot refers to a robot capable of autonomously performing a sweeping task in an operating environment thereof, and includes a floor sweeping robot, a glass cleaning robot and the like. Other service robots refer to robots that can move autonomously in their operating environments and provide non-cleaning services, including an air purifying robot, a home caring robot, a guest greeting robot and the like.

In some embodiments, the shape of the autonomous mobile device may vary depending on the implementation of the autonomous mobile device. The embodiment does not limit the shape of the autonomous mobile device. In some embodiments, the outer contour of the autonomous mobile device may be in an irregular or regular shape. For example, the outer contour of the autonomous mobile device may be in a regular shape of a circle, an ellipse, a square, a triangle, a water drop, or a D-shape. Alternatively, the outer contour of the autonomous mobile device may be in an irregular such as, for example, an outer contour of a humanoid robot, an outer contour of an unmanned vehicle, and an outer contour of an unmanned vehicle may each include an irregular shape.

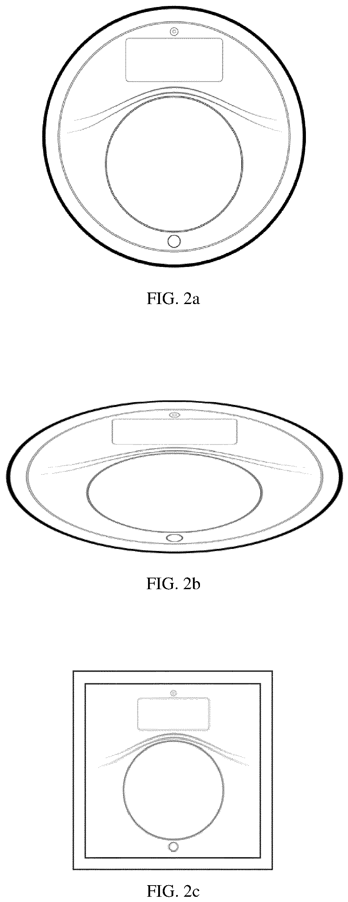

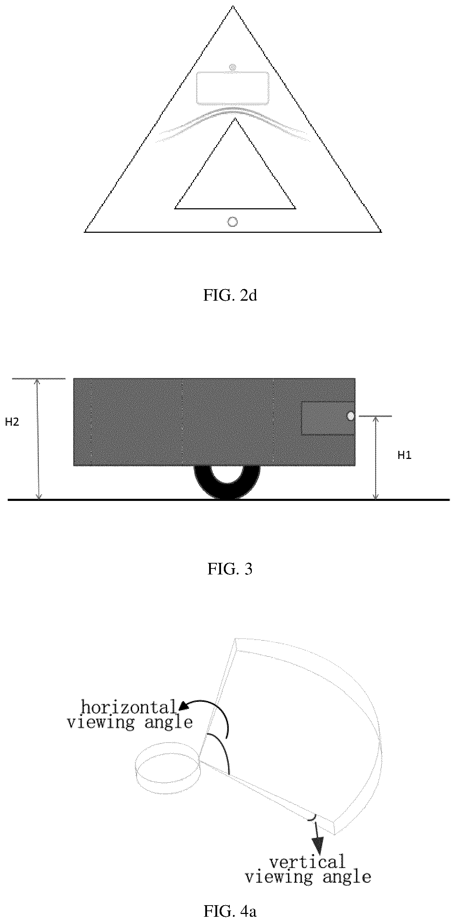

Alternatively, in the case where the autonomous mobile device is a sweeping robot, as shown in FIGs. 2a-2d, the outer contour of the sweeping robot may be circular, elliptical, square or triangular, etc.

In order to be able to move autonomously in an operating environment, an autonomous mobile device may obtain information to be aware of its operating environment. In the present embodiment, the device body 101 of the autonomous mobile device is provided with an area array laser sensor 103, and the area array laser sensor 103 may acquire environment information in the operating environment of the autonomous mobile device and transmit the acquired environment information to a control unit 102; the control unit 102 may receive the environment information transmitted by the area array laser sensor 103 and sense the operating environment of the autonomous mobile device according to the environment information, so as to perform function control on the autonomous mobile device.

The area array laser sensor 103 may include a laser emitting array and an information acquisition module, where the information acquisition module may acquire an environment image and also may receive reflected light returned by laser striking an object. The information acquisition module may include components such as a camera. The working principle of the area array laser sensor 103 is as follows: the laser emitting array emits a light source outwards through an optical imaging system in front of the laser emitting array, after the emitted light source reaches the surface of an object, a part of the emitted light source reflects back and forms pixel points on an image through the optical imaging system in front of the information acquisition module. Because the distances from the surface of the object to the return points are different, the time of flight (TOF) of the reflected light is different, thereby allowing determination of independent distance information for each pixel point by measuring the time of flight of the reflected light, with the detection range reaching more than one hundred meters. Further, the information acquisition module of the area array laser sensor 103 may also acquire images of the surrounding environment, realizing rapid 3D imaging with resolution at a megapixel level and an imaging frequency of more than 30 frames per second.

The environment information acquired by the area array laser sensor 103 may contain not only the direction and distance information, but also may add the reflectivity information of the object surface, supplemented with a depth learning technology in a three-dimensional scene, which may realize the cognitive ability of environmental elements. When the number of laser lines is large and dense, the data formed by the reflectivity information may be regarded as texture information, from which environment characteristics with matching and identification values may be obtained, with strong environment identification capability, and the advantages brought by the visual algorithm and the texture information may be enjoyed to a certain extent. In some embodiments, combining the advantages of line laser sensor and vision sensor by the area array laser sensor 103 may not only be beneficial in improving the spatial understanding of the autonomous mobile device on the environment, but may also be beneficial in improving the quality of the autonomous mobile device in terms of obstacle identification performance, and may even enable the spatial understanding of the autonomous mobile device on the environment to reach the level of human eyes; in addition, compared with a sensing solution based on an image sensor, the area array laser sensor 103 may provide more accurate distance and direction information, reduce the complexity of sensing operations, and improve real-time performance.

In addition to the above-mentioned advantages for the area array laser sensor 103, the area array laser sensor 103 may provide additional advantages in the following aspects: 1) the area array laser sensor 130 may have the advantages of solidity, low cost and miniaturization; 2) when the area array laser sensor 103 is installed and used, no rotating component may be needed, thereby greatly compressing the structure and the size of the sensor, increasing the service life, and reducing the cost; 3) the viewing angle of the area array laser sensor 103 may be adjusted to adapt to different autonomous mobile devices, which may be beneficial to accelerating the scanning speed and the scanning precision; 4) the area array laser sensor 103 may simultaneously acquire environment information in both the horizontal direction and the vertical direction and can build a 3D map, which may be beneficial to improving the accuracy of functions such as positioning based on the map, navigation planning and the like.

In some embodiments, the autonomous mobile device may be controlled to implement various environment sensing-based functions according to the environment information acquired by the area array laser sensor 103 including three dimensions of direction, distance, and reflectivity. For example, the functions of object identification, tracking, classification and the like on a visual algorithm may be realized; in addition, based on the high precision of laser ranging, the functions of positioning, constructing a map and the like with strong real-time performance, strong robustness and high precision may be realized so as to further provide comprehensive support for motion planning, path navigation and the like based on the constructed high-precision environment map. A detailed description of these functions can be seen in the following embodiments.

In some alternative embodiments, as shown in FIG. 1b, the device body 101 may include a preprocessing chip 104, which may be electrically connected to the control unit 102 and the area array laser sensor 103. The preprocessing chip 104 may preprocess the environment information acquired by the area array laser sensor 103 and output the preprocessed environment information to the control unit 102 before the control unit 102 uses the environment information acquired by the area array laser sensor 103. Accordingly, the control unit 102 may specifically perform function control on the autonomous mobile device according to the preprocessed environment information provided by the preprocessing chip 104.

Alternatively, the preprocessing of the environment information by the preprocessing chip 104 may include any combination of parsing, synchronizing, fusing, and filtering. In some embodiments, parsing may include formatting the environment information acquired by the area array laser sensor 103 and parsing it from the data format supported by the area array laser sensor 103 to the data format supported by the control unit 102. In some embodiments, synchronizing may include aligning the environment information, in the case where a plurality of area array laser sensors 103 are triggered asynchronously, acquired by the plurality of area array laser sensors 103 in time. In some embodiments, fusing may include integrating the environment information, in the presence of a plurality of area array laser sensors 103, acquired by the plurality of area array laser sensors 103. In some embodiments, filtering may include smoothing, denoising, enhancing the edge, extracting and deleting specific frequencies of the environment information acquired by the area array laser sensor 103, including the detection and filtering of outliers.

In these alternative embodiments, the preprocessing chip 104 may be configured to preprocess the environment information so as to provide high-quality environment information to the control unit 102, which may be beneficial in reducing the processing load of the control unit 102, improving the information processing efficiency, and further improving the efficiency of function control of the autonomous mobile device. Further, as shown in FIG. 1b, the preprocessing chip 104 and the area array laser sensor 103 may be integrated into one module, which may be referred to as an environment sensing module 105 for ease of description and differentiation. That is, the preprocessing chip 104 and the area array laser sensor 103 may be integrated in the environment sensing module 105. In some embodiments, the environment sensing module 105 may be configured to acquire environment information in the operating environment of the autonomous mobile device, preprocess the acquired environment information, and output the preprocessed environment information to the control unit 102. As the environment sensing module 105 is of a chip structure, the environment sensing module 105 may be firmer and more reliable compared to a mechanical structure, and the environment sensing module 105 may not be easy to damage and may have higher reliability especially in the case of collision of the autonomous mobile device.

Alternatively, the environment sensing module 105 may take the area array laser sensor 103 as the main sensor to be responsible for acquiring environment information in the operating environment of the autonomous mobile device. In addition, the environment sensing module 105 may further incorporate a non-area array laser sensor 106 as an auxiliary sensor to assist in acquiring more abundant environment information. Alternatively, the non-area array laser sensor 106 may include one or any combination of an ultrasonic sensor, an infrared sensor, a vision sensor, a single-line laser sensor, and a multi-line laser sensor. The environment information acquired by the various sensors may be integrated so as to further improve the accuracy and precision of environment sensing and may be beneficial to further improving the accuracy of function control.

Alternatively, the preprocessing chip 104 may also be electrically connected to the non-area array laser sensor 106 for preprocessing the environment information acquired by the non-area array laser sensor 106 through at least one of parsing, synchronizing, fusing, filtering and the like. In some embodiments, fusing may include fusing the environment information from the area array laser sensor 103 and the non-area array laser sensor 106; in some embodiments, synchronizing may include synchronizing the environment information from the area array laser sensor 103 and the non-area array laser sensor 106.

In the above embodiment, the area array laser sensor 103, the non-area array laser sensor 106 and the preprocessing chip 104 may be designed in a modularization mode, which may facilitate usage in various autonomous mobile devices, reducing the size of the autonomous mobile devices, and making it more convenient to reuse, upgrade, maintain and the like.

In some embodiments of the present disclosure, implementation structures of the device body 101 may not limited, and the implementation structure of the device body 101 may differ depending on the device configuration of the autonomous mobile device. An implementation structure of the device body 101 is depicted below. In an alternative embodiment, the device body 101 may include a housing having side walls and a top cover. In some embodiments, the area array laser sensor 103 may be provided along the side walls of the housing and inside the side walls to acquire environment information in the operating environment of the autonomous mobile device through a transparent window where the transparent window is provided on a side wall of the housing. In other embodiments, no transparent window may be provided on the side walls of the housing, and instead the area array laser sensor may be provided along the side walls of the housing and outside the side walls. Reference will now be made to the following embodiments for a description of the height, location, number, etc. at which the area array laser sensors may be provided outside or inside the side walls. In some embodiments, an autonomous mobile device with a housing with side walls and a top cover structure may be an air purifier, a floor sweeping robot, a window cleaning robot and the like.

The shape, structure, number, viewing angle range and position of the area array laser sensor may vary depending on the configuration of the autonomous mobile device. The various embodiments of the present disclosure are not intended to limit the shape, the structure, the number, the viewing angle range, or the position of the area array laser sensor, which may be adaptively selected and set in combination with the implementation shape and the application requirements of the autonomous mobile device. The following is an exemplary illustration of an area array laser sensor from several respects:

### Coverage of the area array laser sensor:

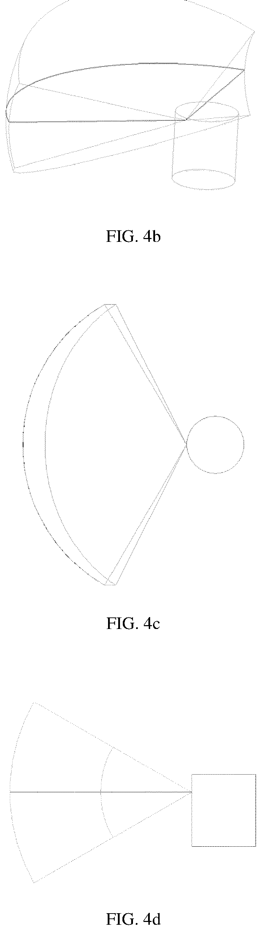

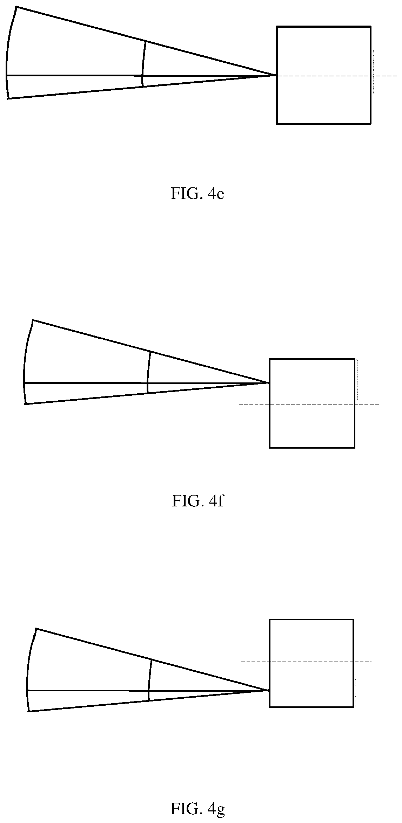

The area array laser sensor may have a certain viewing angle in both the horizontal direction and the vertical direction, which is simply referred to as a horizontal viewing angle and a vertical viewing angle, as shown in FIG. 4a. In FIG. 4a, the outer contour of the autonomous mobile device is circular, but other outer contours are contemplated.

The horizontal viewing angle refers to the effective range in which the area array laser sensor may acquire information on a horizontal plane, and the vertical viewing angle refers to the effective range in which the area array laser sensor can acquire information on a vertical plane. The combination of the horizontal viewing angle and the vertical viewing angle of the area array laser sensor can form an effective spatial range in which the area array laser sensor can acquire information. In some embodiments, the horizontal viewing angle and the vertical viewing angle may vary depending on the particular area array laser sensors. For example, some area array laser sensors may have a horizontal viewing angle of 120 degrees and a vertical viewing angle of 10 degrees; other area array laser sensors may have a horizontal viewing angle of 90 degrees and a vertical viewing angle of 9 degrees. For an area array laser sensor, the horizontal viewing angle thereof may determine the coverage of the area array laser sensor on a horizontal plane; similarly, its vertical viewing angle may determines the coverage of the area array laser sensor on a vertical plane.

In some embodiments, in order to meet the autonomous mobile requirement of autonomous mobile devices, the coverage of the area array laser sensors provided on the autonomous mobile devices on a horizontal plane may be overlapped to meet the viewing angle beneficial for the normal operation of the autonomous mobile devices on a horizontal plane.

In some embodiments, the viewing angle desired for the normal operation of an autonomous mobile device on a horizontal plane may be 60 to 270 degrees, and consequently the area array laser sensors provided on the autonomous mobile device may cover 60 to 270 degrees on a horizontal plane.

As an example, with a conveying robot operating in a warehouse, whether the robot can pass when moving in the warehouse may be determined according to a horizontal viewing angle of about 60 to 150 degrees, and thus an area array laser sensor on the robot may provide coverage of about 60 to 150 degrees on a horizontal plane.

As another example, with a floor sweeping robot operating in a home environment, in order to perform a sweeping task in the home environment, positioning and mapping according to a horizontal viewing angle of about 150 to 270 degrees may be used to assist in sweeping the floor, and thus an area array laser sensor on the robot may provide coverage of 150 to 270 degrees on a horizontal plane.

As another example, with a guest greeting robot operating in a shopping mall or the like, a horizontal viewing angle of about 270 to 360 degrees may be used to perform a guest greeting task based on shop guidance and target tracking, and thus an area array laser sensor on the robot may provide coverage of 270 to 360 degrees on a horizontal plane.

In some embodiments, the coverage of an area array laser sensor provided on the autonomous mobile device on a vertical plane may be similar to the coverage of the area array laser sensor provided on the autonomous mobile device on a horizontal plane, and the coverage of the area array laser sensor provided thereon on a vertical plane may also be selected to meet the viewing angle beneficial for the normal operation of the autonomous mobile devices on a vertical plane.

In some embodiments, the viewing angle desired for the normal operation of an autonomous mobile device in both horizontal and vertical planes may be achieved using one area array laser sensor overlay or at least two area array laser sensors. If one area array laser sensor is adopted, the horizontal viewing angle of the area array laser sensor may be greater than or equal to the horizontal viewing angle desired for the normal operation of the autonomous mobile device, for example, the horizontal viewing angle of the area array laser sensor may be 100 to 150 degrees, but is not limited hereto; similarly, the vertical viewing angle of the area array laser sensor may be greater than or equal to the vertical viewing angle desired for the normal operation of the autonomous mobile device. If at least two area array laser sensors are adopted, the horizontal viewing angle resulting from the superposition of the horizontal viewing angles of the at least two area array laser sensors may be greater than or equal to the horizontal viewing angle desired for the normal operation of the autonomous mobile device; similarly, the vertical viewing angle resulting from the superposition of the vertical viewing angles of the at least two area array laser sensors may be greater than or equal to the vertical viewing angle desired for the normal operation of the autonomous mobile device.

Using the conveying robot described above as an example, if an area array laser sensor is provided on the conveying robot, the area array laser sensor with a horizontal viewing angle of 150 degrees may be selected.

In practical applications, there may be some simple application requirements where only a single area array laser sensor may be used to solve the problem of environment sensing, and thus only one area array laser sensor may be provided on an autonomous mobile device operating in these environments. In addition, there may be complex application requirements in which at least two area array laser sensors may be used to solve the problem of environment sensing, and thus at least two area array laser sensors may be provided on an autonomous mobile device operating in these environments. A case where one area array laser sensor is provided and at least two area array laser sensors are provided will be depicted respectively below:
**In a case where one area array laser sensor is provided on an autonomous mobile device:** the area array laser sensor may be provided on a front side of the device body 101 of the autonomous mobile device, where the front side refers to a side toward which the device body 101 faces during forward movement of the autonomous mobile device.

The autonomous mobile device may move forward or move backward during its movement. "Forward" herein is to be understood as: the direction towards which the autonomous mobile device moves frequently or in most cases during operation. As an example of an autonomous mobile device having a circular outer contour, a state where an area array laser sensor is provided on the autonomous mobile device is shown in FIG. 4a. In addition, taking a cylindrical autonomous mobile device as an example, a state where an area array laser sensor is provided on the autonomous mobile device is shown in FIGs. 4b to 4d. The area array laser sensor is provided on a front side of the device body 101 of the autonomous mobile device to acquire environment information in front of the autonomous mobile device more conveniently and accurately during the moving process and to make the autonomous mobile device avoid obstacles more accurately and travel smoothly in the re-traveling process.

Each autonomous mobile device may typically have a certain height, for example, both robots as shown in FIGs. 2a to 2f and an unmanned vehicle as shown in FIG. 3 all have a certain height. In some embodiments, an area array laser sensor may be positioned in the height direction of the device body 101 at different levels. The embodiments of the present disclosure are not limited to including area array laser sensors at any particular height on a device body, and the position of the area array laser sensor in the height direction of the device body 101 may be flexibly selected according to the application requirements and the height of the autonomous mobile device. As an example of an autonomous mobile device having a square outer contour, as shown in FIGs. 4e to 4g, the area array laser sensor may be provided at a middle position, a top position or a bottom position in the height direction of the device body 101. The middle position, the top position and the bottom position in the height direction of the device body 101 may be specific positions or may be a certain range. Referring to FIG. 3, when the height of the highest plane of the autonomous mobile device from the ground is H2, the middle position is at the H2/2 position in the height direction of the device body 101, the top position is at the highest plane, i.e., the H2 position, and the bottom position is at the lowest plane. Or, referring to FIG. 3, when the height of the highest plane of the autonomous mobile device from the ground is H2, the area between (H2/2-d) and (H2/2-d) in the height direction of the device body 101 is the middle position, and accordingly, the area between (H2-d) and H2 is the top position, and the area between 0 and d is the bottom position; where d is a natural number greater than 0.

In some application scenarios, it may be desirable to detect or identify low-height obstacles, such as ground cables and door lines, to prevent the autonomous mobile device from getting stuck during operation. In these application scenarios, an area array laser sensor may be positioned near the bottom of the device body so as to facilitate the detection or identification of low-height obstacles. For example, for a floor sweeping robot, the area array laser sensor may be less than 5cm from the bottom of the device body. Based on the height of the autonomous mobile device, the distance between the area array laser sensor and the bottom of the device body may be flexibly adjusted, as long as obstacles with lower height may be detected.

In some application scenarios, it may be desirable to implement a collision avoidance function using an area array laser sensor. In a scene requiring collision avoidance, the vertical upward and vertical downward viewing angle openings of the area array laser sensor may be set according to collision avoidance requirements. With reference to FIG. 3, assuming that the maximum traveling speed of the autonomous mobile device is S_max and the operation reaction time is T, it is possible to calculate the horizontal minimum distance (i.e., the autonomous mobile device may be likely to collide at lesser distances) for the autonomous mobile device to achieve collision avoidance through the area array laser sensor is D_min = S_max ^{∗} T. Additionally, the vertical downward viewing angle opening θ_down = arctan (H1/D_min) and the vertical upward viewing angle opening θ_up = arctan ((H2-H1)/D_min) of the area array laser sensor may be calculated assuming that the height of the transmitting and receiving terminal of the area array laser sensor from the ground is H1 and the height of the highest plane of the autonomous mobile device from the ground is H2. Therefore, for an autonomous mobile device satisfying the traveling speed, the operation reaction time and the height requirement, the collision avoidance function of the autonomous mobile device may be achieved by selecting an area array laser sensor with the above vertical downward viewing angle opening and the vertical upward viewing angle opening.

In some embodiments, the vertical upward and vertical downward viewing angle openings of the area array laser sensor may be flexibly adjusted according to different application requirements. Here are some examples:
For example, when using an area array laser sensor for object recognition, tracking and classification, the vertical upward viewing angle opening may be appropriately increased, and the vertical downward viewing angle opening may be appropriately decreased, as long as the area array laser sensor is capable of covering an object within a range of an appropriate distance, such as selecting a one-step distance generally maintained by face-to-face communication, i.e., a distance of about 0.6 meters.

As another example, during the traveling of an autonomous mobile device, an area array laser sensor may be required to detect height drops on the ground, including, for example, clutter humps, up and down stair drops, and the like, so as to predict whether the height drops will catch the chassis of the autonomous mobile device or not, and if not, it will pass; otherwise, it will abandon the route. In this case, the vertical downward viewing angle opening of the area array laser sensor may be selected as θ_down calculated by the above formula, and the vertical upward viewing angle opening only needs to be at or above the horizontal plane.

As another example, when an area array laser sensor is for achieving positioning and mapping, theoretically, the vertical viewing angle of the area array laser sensor may be as long as there is an opening, without limiting the size of the opening. In some embodiments, if the opening of the vertical viewing angle is large to a certain extent, an interior 3D map may be constructed thereby, which may cover the entire operating environment of the autonomous mobile device in both the length and width directions, and may cover the body height or more of the autonomous mobile device in the height direction, where the body height refers to the distance between the highest plane of the autonomous mobile device and the plane where the autonomous mobile device is located.

In addition to the vertical viewing angle desired to meet application requirements, the horizontal viewing angle of the area array laser sensor may be greater than or equal to that desired for the normal operation of the autonomous mobile device, for example, greater than 90 degrees, 120 degrees, 150 degrees, 180 degrees, and the like.

**In a case where at least two area array laser sensors are provided on an autonomous mobile device:** In some embodiments, the device body 101 may include at least two area array laser sensors such as 2, 3, 4, or any number of area array laser sensors. The at least two area array laser sensors may be provided at different positions of the device body 101. For example, the at least two area array laser sensors may be provided around the device body 101, i.e., may be provided surrounding the device body 101 so as to acquire environment information in the operating environment of the autonomous mobile device from 360 degrees. As another example, the at least two area array laser sensors may be provided at different positions on a front side of the device body 101, where the "front side" also refers to the side toward which the device body 101 faces during the forward movement of the autonomous mobile device, so as to acquire environment information in front of the autonomous mobile device from a plurality of angles. "Forward" herein is to be understood as: the direction towards which the autonomous mobile device moves frequently or in most cases during operation.

Alternatively, in some embodiments, the at least two area array laser sensors may be uniformly distributed on the device body 101. Such example embodiments are exemplary and other distributions of area array laser sensors on the device body are contemplated.

In some embodiments, the at least two area array laser sensors may be provided at different positions on the device body 101, and in addition, it is beneficial to consider the problem of setting the heights of the at least two area array laser sensors in the height direction of the device body 101. The embodiment is not intended to limit thereto, and the height at which the at least two area array laser sensors may be provided on the device body 101 may be flexibly selected according to the application requirements and the height of the autonomous mobile device.

In the alternative example embodiment a1, the heights at which some of the at least two area array laser sensors may be provided on the device body 101 are the same. For example, a plurality of area array laser sensors may be provided at an particular height position to acquire more abundant environment information at that height position.

In the alternative example embodiment a2, the height at which each of the at least two area array laser sensors is provided on the device body 101 may be different to acquire environment information at different height positions and to improve the richness of the environment information.

In some embodiments, when the heights at which each of the at least two area array laser sensors are positioned on the device body 101 are different, the at least two area array laser sensors may be positioned on the same straight line in the height direction of the device body 101.

Alternatively or additionally, when the heights at which each of the at least two area array laser sensors are positioned on the device body 101 are different, the farthest line-of-sight ends of the vertical viewing angles of two adjacent area array laser sensors in the height direction of the device body 101 may intersect; or, the vertical viewing angles of the two adjacent area array laser sensors in the height direction of the device body 101 may partially coincide. In these and other embodiments, the at least two area array laser sensors may cover a vertical plane seamlessly, which may be conducive to acquiring more abundant environment information.

In the alternative example embodiment a3, the heights at which each of the at least two area array laser sensors are positioned on the device body 101 may be the same and the area-array laser sensors may be provided on the same height.

In some application scenarios, it may be desirable to detect or identify low-height obstacles, such as ground cables and door lines, to prevent the autonomous mobile device from getting stuck during operation. In these application scenarios, some of the at least two area array laser sensors may be positioned near the bottom of the device body so as to facilitate the detection or identification of low-height obstacles. For example, in the case of a floor sweeping robot, at least some of the area array laser sensors may be located less than 5cm from the bottom of the device body. Based on the height of the autonomous mobile device, the distance between the area array laser sensors and the bottom of the device body may be flexibly adjusted, as long as obstacles with lower height can be detected.

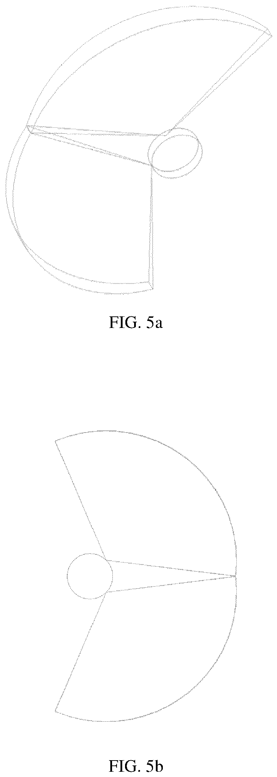

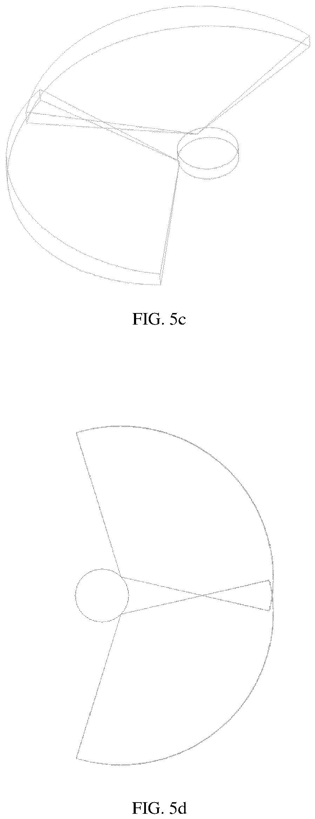

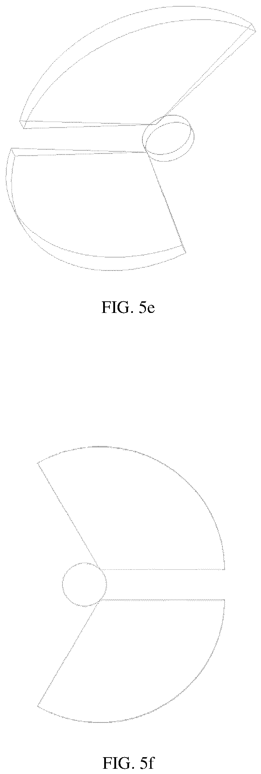

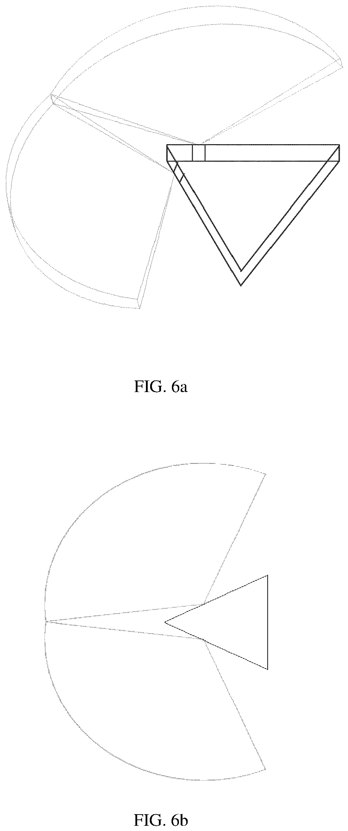

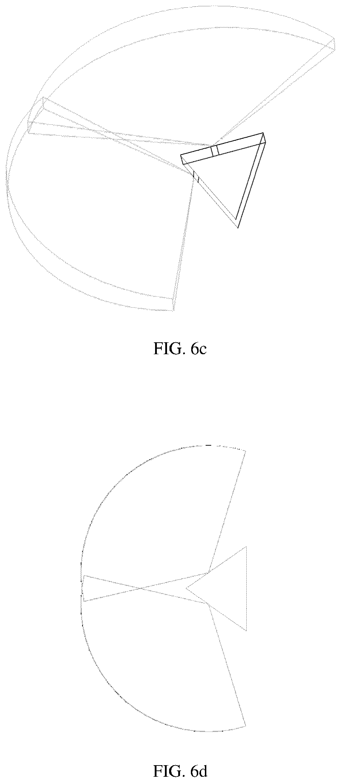

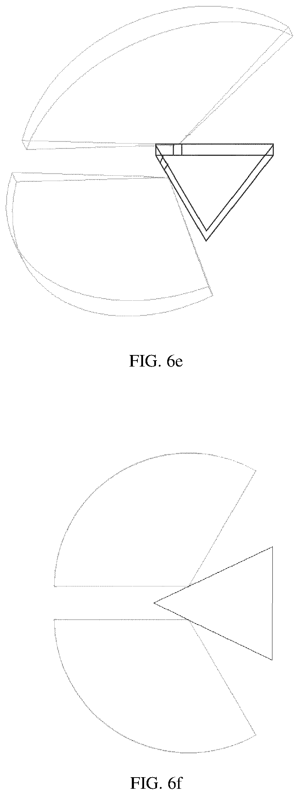

In some embodiments, from the horizontal direction of the device body 101, the farthest line-of-sight ends of the horizontal viewing angles of adjacent area array laser sensors may intersect, or the horizontal viewing angles of the adjacent area array laser sensors may partially overlap, or the boundaries of the horizontal viewing angles of the adjacent area array laser sensors may be parallel. As an example of an autonomous mobile device having a circular outer contour, a state where the farthest line-of-sight ends of the horizontal viewing angles of the adjacent area array laser sensors intersect is shown in FIGs. 5a and 5b; a state where the horizontal viewing angles of the adjacent area array laser sensors partially overlap is shown in FIGs. 5c and 5d; a state where the boundaries of the horizontal viewing angles of the adjacent area array laser sensors are parallel is shown in FIGs. 5e and 5f. In addition, as an example of an autonomous mobile device having a triangular outer contour, a state where the farthest line-of-sight ends of the horizontal viewing angles of the adjacent area array laser sensors intersect is shown in FIGs. 6a and 6b; a state where the horizontal viewing angles of the adjacent area array laser sensors partially overlap is shown in FIGs. 6c and 6d; a state where the boundaries of the horizontal viewing angles of the adjacent area array laser sensors are parallel is shown in FIGs. 6e and 6f.

In some embodiments, in a case where at least two area array laser sensors are provided, each area array laser sensor may have a horizontal viewing angle and a vertical viewing angle, respectively. Alternatively, in some embodiments the horizontal viewing angles of each of the at least two area array laser sensors may be the same. Alternatively, in some embodiments, the horizontal viewing angles of some of the area array laser sensors may be the same and the horizontal viewing angles of other area array laser sensors may be different. Similarly, in some embodiments, the vertical viewing angles of each of the at least two area array laser sensors may be the same. Alternatively, in some embodiments, the vertical viewing angles of some of the area array laser sensors may be the same while the vertical viewing angles of some of the area array laser sensors may be different.

An exemplary instruction of the positions and heights of area array laser sensors is made below with an example of two area array laser sensors being provided. For ease of description and distinction, the two area array laser sensors are referred to as a first area array laser sensor and a second area array laser sensor.

The first area array laser sensor and the second area array laser sensor may respectively be provided at different positions of the device body 101. For example, the first area array laser sensor and the second area array laser sensor may provided at 45° on the left front side and 45° on the right front side of the device body 101, respectively.

In some embodiments, the first area array laser sensor and the second area array laser sensor may be respectively provided at the positions of 45° on the left front side and 45° on the right front side at the same height of the device body 101. For example, the first area array laser sensor and the second area array laser sensor may both be provided at the positions of 45° on the left front side and 45° on the right front side at a middle position of the device body 101, may both be provided at the positions of 45° on the left front side and 45° on the right front side at a top position of the device body 101, or may both be provided at the positions of 45° on the left front side and 45° on the right front side at a bottom position of the device body 101.

Alternatively or additionally, in some embodiments, the first area array laser sensor and the second area array laser sensor may be provided at the positions of 45° on the left front side and 45° on the right front side at different height on the device body 101, respectively. For example, the first area array laser sensor may be provided at a position of 45° on the left front side or 45° on the right front side at a middle position of the device body 101, and accordingly, the second area array laser sensor may be provided at a position of 45° on the right front side or 45° on the left front side at a top position of the device body 101. As another example, the first area array laser sensor may be provided at a position of 45° on the left front side or 45° on the right front side at a middle position of the device body 101, and accordingly, the second area array laser sensor may be provided at a position of 45° on the right front side or 45° on the left front side at a bottom position of the apparatus body 101. As another example, the first area array laser sensor may be provided at a position of 45° on the left front side or 45° on the right front side on a top position of the device body 101, and accordingly, the second area array laser sensor may be provided at a position of 45° on the right front side or 45° on the left front side on a bottom position of the device body 101.

In addition to the autonomous mobile devices depicted above, embodiments of the present disclosure further provide control methods suitable for the autonomous mobile devices. The control methods are depicted separately below:

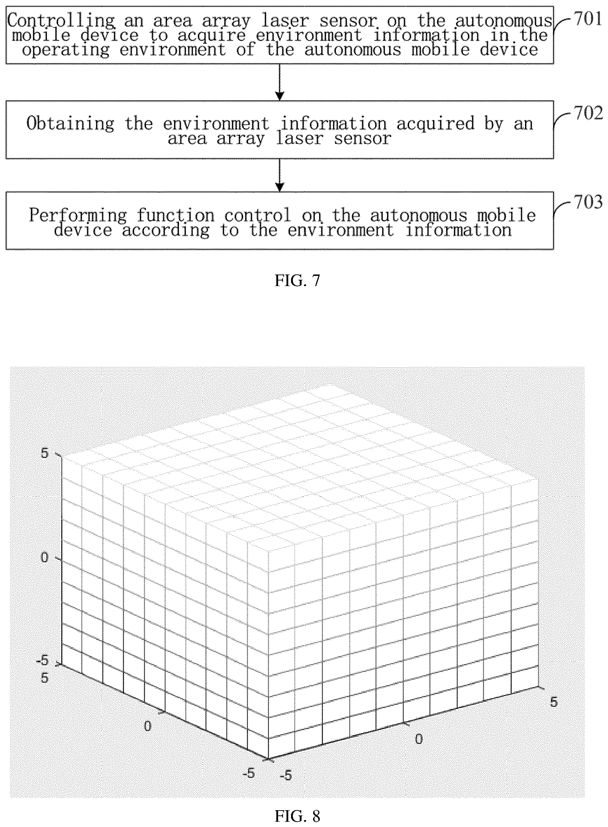

FIG. 7 is a flow diagram of a control method for an autonomous mobile device according to an exemplary embodiment of the present disclosure. As shown in FIG. 7, the method may include:
701. controlling an area array laser sensor on the autonomous mobile device to acquire environment information in the operating environment of the autonomous mobile device;
702. obtaining the environment information acquired by an area array laser sensor; and
703. performing function control on the autonomous mobile device according to the environment information.

In some embodiments, an area array laser sensor may be provided on the autonomous mobile device for acquiring environment information in the operating environment of the autonomous mobile device, where the environment information may include direction information, position information and reflectivity information of obstacles around the autonomous mobile device, supplemented with a depth learning technology under a three-dimensional scene, which may realize the cognitive ability of environmental elements, and may then perform functional control on the autonomous mobile device according to the environment information.

In some embodiments, when the number of laser lines is large and dense, the data formed by the reflectivity information may be regarded as texture information, from which environment characteristics with matching and identification values may be obtained, with strong environment identification capability, and the advantages brought by visual algorithm and the texture information may be enjoyed. In these and other embodiments, the area array laser sensor may combine the advantages of line laser sensor and vision sensor, which may not only be beneficial to improving the space understanding of the autonomous mobile device on the environment, but may also be beneficial to improving the quality of the autonomous mobile device on obstacle identification performance, and may even facilitate the space understanding of the autonomous mobile device on the environment to reach the level of human eyes. In these and other embodiments, when compared with a sensing solution based on an image sensor, the area array laser sensor may provide more accurate distance and direction information, reduce the complexity of sensing operations, and improve real-time performance.

Alternatively, in some embodiments, the environment information may be preprocessed, including one or any combination of parsing, synchronizing, fusing, and filtering. The illustrations of parsing, synchronizing, fusing, and filtering may be made in the foregoing embodiments and will not be depicted in detail herein.

Alternatively, in some embodiments, the autonomous mobile device may be subjected to at least one of the following function controls according to the environment information acquired by the area array laser sensor: controlling the autonomous mobile device to construct an environment map based on the environment information; controlling the autonomous mobile device to perform navigation positioning based on the environment information; and controlling the autonomous mobile device to perform object identification based on the environment information, among other function controls.

Alternatively, in some embodiments, a 3D environment map may be constructed based on the environment information acquired by the area array laser sensor. In these and other embodiments, a 2D environmental map may also be constructed if positioning requirements are met.

Alternatively, in some embodiments, a SLAM process based on the area array laser sensor may be realized by combining the area array laser sensor with SLAM algorithm. In the present embodiment, the SLAM process based on the area array laser sensor is as follows:
Providing pose prediction data P by an odometer or other sensors on the autonomous mobile device, and providing observation data Z by the area array laser sensor, as the input data of a SLAM algorithm, where the data can be input frame by frame or by a plurality of frames together, which is collectively referred to as a group of data. The observation data Z herein is the environment information acquired by the area array laser sensor in the operating environment of the autonomous mobile device.

Preprocessing each group of data, including one or any combination of parsing, synchronizing, fusing and filtering; then entering a data association process, where the association process comprises data pairing, feature tracking, closed loop detecting and the like; then performing maximum a posteriori estimation to estimate the pose and update map information accordingly. In some embodiments, the feature tracking refers to selecting some of data easily recognized from a group of data as a feature set, such as a boundary line, a centroid, a corner and the like, and matching the feature set to achieve tracking when the subsequent environment information appears. For an autonomous mobile device, it may return to a previous position in the moving process, and if so, the motion trajectory of the autonomous mobile device may form a closed loop. In some embodiments, closed loop detecting may refer to the process of effectively identifying whether closed loop occurs in the motion trajectory of the automatic mobile device.

Inter-group data may be matched with the pose prediction data P provided by the odometer or a relocation algorithm such as, for example, a filtering algorithm such as particle filtering and a matching algorithm (for example, an ICP algorithm) may be used for matching the inter-group data to estimate the accurate machine pose P', and construct an environment map according to the estimated machine pose P' and the observation data.

Alternatively, in some embodiments, in constructing an environment map, a spatially segmented density map may be selected, i.e., a three-dimensional space may be cut into individual small grid voxels, thereby forming the three-dimensional (3D) grid map shown in FIG. 8, each with probability information to indicate its confidence coefficient, indicating its blank, unknown, and occupied state, respectively. A 2D map may be a cut of a two-dimensional space, while a 3D map may be a cut of a three-dimensional space.

After the 3D grid map is obtained, the environment information acquired by the area array laser sensor may be matched with the 3D grid map to obtain the actual pose P' of the autonomous mobile device. Further, when the actual pose P' of the autonomous mobile device is known, in combination with the observation data Z of the area array laser sensor, a more accurate 3D grid map may be continuously constructed according to the principle of light propagation and hitting.

In some embodiments, a general positioning process based on the constructed environment map may include: firstly, using sensors such as an odometer and the like to provide pose prediction data P of the autonomous mobile device, obtaining environment information acquired by an area array laser sensor as observation data Z, and then matching in the constructed environment map M according to a matching algorithm to obtain the actual pose P' of the autonomous mobile device. In the process, if the positioning fails, the actual pose P' may be obtained by repositioning, such that the positioning problem based on the area array laser sensor under a known environment map may be realized.

In addition to the above embodiments, in a case where at least two area array laser sensors are provided thereon, it may be possible to functionally control the autonomous mobile device according to the environment information acquired by the area array laser sensors in the following manner: acquiring initial environment images of at least two different viewing angles according to the environment information acquired by the at least two area array laser sensors; splicing and combining the initial environment images of at least two different viewing angles to obtain a combined environment image; and performing function control on the autonomous mobile device according to the combined environment image. Alternatively or additionally, in some embodiments, obstacles in the operating environment of the autonomous mobile device may be identified according to the height information and the distance information of the objects in the combined environment image. In these and other embodiments, the autonomous mobile device may be controled to avoid obstacles according to the obstacles in the operating environment of the autonomous mobile device. In these and other embodiments, the distance information of the object in the combined environment image may include the distance between the object in the image and the autonomous mobile device calculated according to the combined environment image.

In addition to the device embodiments and the method embodiments depicted above, some embodiments of the present disclosure further include a computer-readable storage medium having stored thereon a computer program that, when executed by one or more processors, causes the one or more processors to perform the following acts: controlling an area array laser sensor on the autonomous mobile device to acquire environment information in the operating environment of the autonomous mobile device; obtaining the environment information output by the area array laser sensor; and performing function control on the autonomous mobile device according to the environment information. In some embodiments, the computer program, when executed by one or more processors, may also cause the one or more processors to perform other related acts, and the related description may refer to the aforementioned embodiments, which will not be depicted in detail herein.

In some embodiments, the execution bodies of the steps of the methods provided by the above-described embodiments may be the same device, or the method may be performed by different devices. For example, the execution body of steps 701 to 703 may be device A; as another example, the execution body of steps 701 and 702 may be device A and the execution body of step 703 may be device B; and the like.

In addition, in some embodiments, the various operations described above may be performed in a different order than as described or may be performed in parallel, and the sequence numbers of the operations, such as 701, 702 and the like, are merely used to distinguish between various operations and that the sequence numbers themselves do not represent any order of execution. Additionally, the flows may include more or fewer operations, and the operations may be performed sequentially or in parallel. It should be noted that the description herein of "first", "second" and the like is intended to distinguish between different messages, devices, modules and the like, and is not intended to represent a sequential order, nor is it intended to limit that the "first" and "second" are of different types.

Those skilled in the art will appreciate that the embodiments of the present disclosure may be provided as a method, a system, or a computer program product. Thus, the present disclosure may take the form of an entirely hardware embodiment, an entirely software embodiment, or an embodiment combining software and hardware aspects. Further, the present disclosure may take the form of a computer program product embodied on one or a plurality of computer-usable storage media (including, but not limited to, magnetic disk storage, CD-ROM, optical storage, and the like) having computer-usable program code embodied therein.

The present disclosure is described with reference to flowcharts and/or block diagrams of the methods, devices (systems), and computer program products according to the embodiments of the present disclosure. It is to be understood that each flow and/or block of flowchart and/or block diagram, and combinations of flows and/or blocks in the flowchart and/or block diagram, can be implemented by computer program instructions. These computer program instructions may be provided to a processor of a general-purpose computer, a special-purpose computer, an embedded processor, or other programmable data processing device to produce a machine, such that the instructions, which execute via the processor of the computer or other programmable data processing device, produce means for implementing the functions specified in the flow or flows of the flowchart and/or the block or blocks of the block diagram.

These computer program instructions may also be stored in a computer-readable memory that can direct a computer or other programmable data processing device to function in a particular manner, such that the instructions stored in the computer-readable memory produce an article of manufacture including instruction means which implement the functions specified in the flow or flows of the flowchart and/or the block or blocks of the block diagram.

These computer program instructions may also be loaded onto a computer or other programmable data processing device to cause a series of operational steps to be performed on the computer or other programmable device to produce a computer implemented process such that the instructions which execute on the computer or other programmable device provide steps for implementing the functions specified in the flow or flows of the flowchart and/or the block or blocks of the block diagram.

In a typical configuration, a computing device includes one or a plurality of processors (CPUs), input/output interfaces, network interfaces, and memory. The memory may include non-volatile memory in a computer-readable medium, random access memory (RAM), and/or non-volatile memory, such as read only memory (ROM) or flash RAM. Memory is an example of a computer-readable medium.

Computer readable media, including both permanent and non-permanent, removable and non-removable media, may implement information storage by any method or technique. The information may be computer readable instructions, data structures, modules of a program, or other data. Examples of computer storage medium include, but are not limited to, phase change memory (PRAM), static random access memory (SRAM), dynamic random access memory (DRAM), other types of random access memory (RAM), read only memory (ROM), electrically erasable programmable read only memory (EEPROM), flash memory or other memory technology, compact disc read only memory (CD-ROM), digital versatile disk (DVD) or other optical storage, magnetic cassettes, magnetic tape-magnetic disk storage or other magnetic storage devices, or any other non-transmission medium, can be configured to store information that can be accessed by a computing device. As defined herein, computer-readable media do not include transitory computer-readable media (transitory media), such as modulated data signals and carrier waves.

It should also be noted that the terms "comprise", "include", or any other variation thereof, are intended to cover a non-exclusive inclusion, such that a process, method, article, or device that comprises a list of elements does not include only those elements but may include other elements not expressly listed or inherent to such process, method, article, or device. An element defined by the phrase "comprises a" does not, without more constraints, preclude the existence of additional identical elements in the process, method, article, or device that comprises the element.

The foregoing is by way of example only and is not intended to be limiting. Various modifications and alterations of the present disclosure will occur to those skilled in the art. Any modifications, equivalents, improvements and the like that come within the spirit and principles of the present disclosure are intended to be within the scope of the claims appended hereto.

## Claims

1. An autonomous mobile device, comprising: a device body, wherein, the device body is provided with a control unit and an area array laser sensor, and the control unit is electrically connected with the area array laser sensor;
the area array laser sensor is for acquiring environment information in an operating environment of the autonomous mobile device and transmitting the environment information to the control unit; and the control unit is for performing function control on the autonomous mobile device according to the environment information.

2. The autonomous mobile device according to claim 1, wherein, one area array laser sensor is provided on front side of the device body; and the front side is the side to which the device body faces during forward movement of the autonomous mobile device.

3. The autonomous mobile device according to claim 2, wherein, the area array laser sensor is provided at a middle position, a top position, or a bottom position in a height direction of the device body.

4. The autonomous mobile device according to claim 2, wherein, a vertical downward viewing angle opening of the area array laser sensor is θ_down = arctan(H1/D_min), and a vertical upward viewing angle opening is θ_up = arctan((H2-Hl)/D_min), and D_min = S_max ^{∗} T;
H1 represents a height of a transmitting and receiving terminal of the area array laser sensor from the ground, H2 represents a height of the highest plane of the autonomous mobile device from the ground, S_max represents a maximum traveling speed of the autonomous mobile device, and T represents an operation reaction time of the autonomous mobile device.

5. The autonomous mobile device according to claim 2, wherein, a horizontal viewing angle of the area array laser sensor is greater than or equal to a horizontal viewing angle required for normal operation of the autonomous mobile device.

6. The autonomous mobile device according to claim 1, wherein, the area array laser sensors are at least two, and the at least two area array laser sensors are provided at different positions of the device body.

7. The autonomous mobile device according to claim 6, wherein, the heights at which some of the at least two area array laser sensors are provided on the device body are the same.

8. The autonomous mobile device according to claim 6, wherein, the height at which each of the at least two area laser sensors is provided on the device body is different.

9. The autonomous mobile device according to claim 8, wherein, the farthest line-of-sight ends of the vertical viewing angles of adjacent area array laser sensors in a height direction of the device body intersect; or
the vertical viewing angles of the adjacent area array laser sensors in the height direction of the device body partially coincide.

10. The autonomous mobile device according to claim 8, wherein, the at least two area array laser sensors are provided on the same straight line in a height direction of the device body.

11. The autonomous mobile device according to claim 6, wherein, the height at which each of the at least two area laser sensors is provided on the device body is the same.

12. The autonomous mobile device according to claim 6, wherein, the farthest line-of-sight ends of the horizontal viewing angles of adjacent area array laser sensors in the horizontal direction of the device body intersect; or
the horizontal viewing angles of the adjacent area array laser sensors in the horizontal direction of the device body are partially overlapped; or
the boundaries of horizontal viewing angles of the adjacent area array laser sensors in the horizontal direction of the device body are parallel.

13. The autonomous mobile device according to claim 6, wherein, the horizontal viewing angles of the at least two area array laser sensors are the same.

14. The autonomous mobile device according to claim 6, wherein, the vertical viewing angles of the at least two area array laser sensors are the same.

15. The autonomous mobile device according to claim 6, wherein, the at least two area array laser sensors are provided around the device body.

16. The autonomous mobile device according to claim 6, wherein, the at least two area array laser sensors are provided on front side of the device body; and the front side is the side to which the device body faces during forward movement of the autonomous mobile device.

17. The autonomous mobile device according to claim 16, wherein, the at least two area array laser sensors comprise a first area array laser sensor and a second area array laser sensor; the first area array laser sensor and the second area array laser sensor are respectively provided at positions of 45° on the left front side and 45° on the right front side of the device body.

18. The autonomous mobile device according to claim 17, wherein, the first area array laser sensor and the second area array laser sensor are both provided at a middle position in the height direction of the device body; or
the first area array laser sensor and the second area array laser sensor are both provided at a top position in the height direction of the device body; or
the first area array laser sensor and the second area array laser sensor are both provided at a bottom position in the height direction of the device body; or
the first area array laser sensor is provided at a middle position in the height direction of the device body, and the second area array laser sensor is provided at a top position in the height direction of the device body; or
the first area array laser sensor is provided at a middle position in the height direction of the device body, and the second area array laser sensor is provided at a bottom position in the height direction of the device body; or
the first area array laser sensor is provided at a top position in the height direction of the device body, and the second area array laser sensor is provided at a bottom position in the height direction of the device body.

19. The autonomous mobile device according to claim 6, wherein, among the at least two area array laser sensors, at least some of the area array laser sensors are less than 5cm away from the bottom of the device body.

20. The autonomous mobile device according to any of claims 1 to 19, wherein, a preprocessing chip is further provided on the device body, and the preprocessing chip is electrically connected with the control unit and the area array laser sensor respectively;
the preprocessing chip is for preprocessing the environment information acquired by the area array laser sensor and outputting the preprocessed environment information to the control unit; the control unit is specifically for performing function control on the autonomous mobile device according to the preprocessed environment information.

21. The autonomous mobile device according to claim 20, wherein, the preprocessing comprises one or any combination of parsing, synchronizing, fusing and filtering.

22. The autonomous mobile device according to claim 20, wherein, an environment sensing module is provided on the device body, and the preprocessing chip and the area array laser sensor are integrated in the environment sensing module.

23. The autonomous mobile device according to claim 22, wherein, a non-area array laser sensor is further integrated in the environment sensing module, the non-area array laser sensor comprising: one or any combination of an ultrasonic sensor, an infrared sensor, a vision sensor, a single-line laser sensor and a multi-line laser sensor.

24. The autonomous mobile device according to any of claims 1 to 19, wherein, the control unit is specifically for performing at least one of the following function controls:
constructing an environment map based on the environment information;
performing navigation positioning based on the environment information; and
carrying out object identification based on the environment information.

25. The autonomous mobile device according to claim 24, wherein, the environment information acquired by the area array laser sensor comprises: distance information, direction information and reflectivity information of obstacles around the autonomous mobile device.

26. The autonomous mobile device according to claim 25, wherein, the control unit is specifically for: constructing a 3D grid map according to the initial pose of the autonomous mobile device and the distance information, the direction information and the reflectivity information of the obstacles around the autonomous mobile device.

27. The autonomous mobile device according to claim 26, wherein, the 3D grid map covers the entire operating environment of the autonomous mobile device in both length and width directions, and covers the body height or more of the autonomous mobile device in the height direction, and the body height refers to the distance between the highest plane of the autonomous mobile device and the plane where the autonomous mobile device is located.

28. The autonomous mobile device according to any of claims 1 to 19, wherein, the area array laser sensor has a coverage of 60 to 270 degrees on a horizontal plane.

29. The autonomous mobile device according to claim 28, wherein, the area array laser sensor has a coverage of 150 to 270 degrees, or 60 to 150 degrees on a horizontal plane.

30. The autonomous mobile device according to any of claims 1 to 19, wherein, the autonomous mobile device has an outer contour shape of a circle, an ellipse, a square, a triangle, a droplet, a D-shape or a human shape.

31. The autonomous mobile device according to any of claims 1 to 19, wherein, the device body comprises a housing having side walls and a top cover; the area array laser sensor is provided on the side walls of the housing and is for acquiring environment information in the operating environment of the autonomous mobile device through a transparent window.

32. The autonomous mobile device according to any of claims 1 to 18, wherein, the autonomous mobile device is a robot.

33. The autonomous mobile device according to claim 32, wherein, the robot comprises: a floor sweeping robot, a glass cleaning robot, a home caring robot, an air purifying robot or a guest greeting robot.

34. A control method for an autonomous mobile device, comprising:
controlling an area array laser sensor on the autonomous mobile device to acquire environment information in the operating environment of the autonomous mobile device;
obtaining the environment information acquired by the area array laser sensor; and
performing function control on the autonomous mobile device according to the environment information.

35. The control method according to claim 34, wherein, prior to the performing function control on the autonomous mobile device according to the environment information, further comprising:
preprocessing the environment information, wherein the preprocessing comprises one or any combination of parsing, synchronizing, fusing and filtering.

36. The control method according to claim 34 or 35, wherein, when at least two of the area array laser sensors are provided, the function control on the autonomous mobile device according to the environment information comprises:
obtaining initial environment images of at least two different viewing angles according to the environment information acquired by the at least two area array laser sensors;
splicing and combining the initial environment images of the at least two different viewing angles so as to obtain a combined environment image; and
performing function control on the autonomous mobile device according to the combined environment image.

37. The method according to claim 36, wherein, the autonomous mobile device is functionally controlled according to the combined environment image, comprising:
identifying obstacles in the operating environment of the autonomous mobile device according to the height information and the distance information of objects in the combined environment image; and
controlling the autonomous mobile device so as to avoid obstacles according to the obstacles in the operating environment of the autonomous mobile device.

38. A computer-readable storage medium having a computer program stored thereon that, when executed by one or more processors, causes the one or more processors to perform the following acts:
controlling an area array laser sensor on an autonomous mobile device to acquire environment information in the operating environment of the autonomous mobile device;
obtaining the environment information output by the area array laser sensor; and
performing function control on the autonomous mobile device according to the environment information.
